# EUROPÄISCHE PATENTANMELDUNG

(11) **EP 1 628 182 A1**
(43) Veröffentlichungstag der Anmeldung: **22.02.2006**
(21) Anmeldenummer: 04019525.7
(22) Anmeldetag: 17.08.2004
(51) Int. Cl.: G05F 1/66, H02M 7/42

(54) **Wechselrichter für Solarzellenanlagen**

(71) Anmelder: aixcon Elektrotechnik GmbH, 52222 Stolberg (DE)
(72) Erfinder: Swiontek, Karl, 52224 Stolberg (DE); Gerads, Georg, 52060 Aachen (DE)
(74) Vertreter: Springorum, Harald

(57) **Zusammenfassung**

Wechselrichter (1) für Solarmodule (2), wobei der Wechselrichter (1) eine Einrichtung zur Aufnahme der U/I-Kennlinie (U/I) des Solarmoduls (2) oder der Solarmodule (2) aufweist.

## Beschreibung

Die vorliegende Erfindung betrifft einen Wechselrichter für Solarzellen.

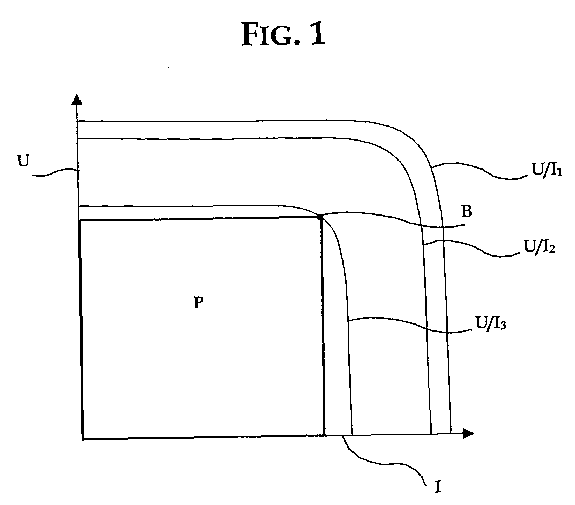

Solarmodule weisen eine sogenannte U/I-Kennlinie, also eine Strom-/Spannungskennlinie auf, die im Bereich von null Ampere Strom bis hin zu einem bestimmten Strom hin annährend flach verläuft, wobei das Niveau der Spannung von der möglichen Leistung des Moduls und der Energie des gerade auf das Modul einfallenden Lichts abhängt. Ab einem bestimmten Strom dann, fällt die Spannung jedoch rapide gegen Null ab (vgl. a. Fig. 1). Entsprechend verhält sich die Leistung P, welche durch die Fläche gegeben ist, die durch das Rechteck aufgespannt wird, dessen einer Eckpunkt im Ursprung und dessen gegenüberlieggender Eckpunkt in dem jeweils betrachteten Punkt auf der U/I-Kennlinie liegt.

Da nun das Niveau der U/I-Kennlinie nicht nur durch vorhersehbare Faktoren, wie die Maximalleistung des Solarmoduls gegeben ist, sondern auch von nicht absehbaren Einflüssen, wie der jeweilig aktuellen Sonneneinstrahlung und/oder der Umgebungstemperatur abhängt, muß das Solarmodul, soll es jeweils eine maximale Leistung erbringen, im entsprechenden optimalen Punkt der U/I-Kennlinie betrieben werden.

Um diesen optimalen Punkt im Betrieb des jeweiligen Solarmoduls oder der jeweiligen Module, so denn mehrere betrieben werden, zu finden sind eine Reihe von Möglichkeiten im Stand der Technik beschrieben worden.

So ist es etwa möglich das Solarmodul mittels eines sogenannten Maximumreglers, wie er nach der DE 198 46 8818 A1 bekannt ist, im jeweiligen Leistungsmaximum zu betreiben.

Aber auch konventionelle Methoden der Maximumsuche nach der Leistung, wie sie etwa aus der US 4 916 282 oder der DE 197 20 427 A1 bekannt sind, können hier Verwendung finden. Diese auch MPP-Tracking (MPP=Maximum Point of Power) bekannten Verfahren sind dabei in der Lage Strom und Spannung des Moduls - und damit indirekt auch seine Leistung - zu messen und mittels eines Mikroprozessors und eines Algorithmus zu lokalen Maximumsuche (vgl. etwa US 4 916 282) oder aber einer entsprechenden gleichwertigen Schaltung (vgl. etwa DE 197 20 427 A1), dabei immer wieder den Punkt maximaler Leitung zu ermitteln und das Modul in diesem zu halten, etwa in dem, wie im Falle der DE 197 20 427 A1 die Ausgangsspannung des Solarmoduls dem jeweilig optimalen Punkt der U/I-Kennlinie angepaßt wird. Grundsätzlich kann aber auch der dem Modul jeweils zu entnehmende Strom entsprechend verändert werden. Allen nach diesem Prinzip der Maximumsuche arbeitenden Schaltungsaufbauten ist gemeinsam, daß sie zum Zwecke des Erreichens des optimalen Solarmodularbeitspunktes (Maximalleistungspunkt [MPP]) entweder die Spannung oder den Strom des Moduls zu verändern in der Lage sind, um hiervon abhängig die Auswirkung auf die Leistung zu messen, um so ihr Maximum einstellen zu können.

Die U/I-Kennlinie eines Moduls oder einer Gruppe von Solarmodulen stellt somit einen entscheidenden Parameter des jeweiligen Solarmoduls dar. Ihre Kenntnis ist damit für den jeweiligen Verwender derartiger Module insbesondere für Wirtschaftlichkeitsbetrachtungen wesentlich, wobei dies nicht nur für den vom Hersteller angegebenen Sollverlauf der Kennlinie gilt, sondern - insbesondere unter dem Gesichtspunkt der Verifikationsmöglichkeit dieser Angaben - auch für den tatsächlichen Verlauf im Einzelfall. Dieses Bedürfnis nach Kenntnis des tatsächlichen Verlaufes der Kennlinie wird noch verstärkt durch den Umstand, daß sich die U/I-Kennlinie nicht nur regulär, etwa entsprechend der jeweiligen Sonneneinstrahlung und Temperatur ändert, sondern auch im Falle von Störungen des Solarmoduls. So kann sich die U/I-Kennlinie etwa im Falle von Schlagschatten, wie etwa durch Vogelkot, Vermoosung verändern. Diese können dann in Folge zu einer U/I-Kennlinie, die Wendepunkte aufweist führen, was in mehreren lokalen Maxima der zugehörigen Leistungskurve münden kann. Aber auch difffuse Abschattungen, wie sie etwa durch Ablösungen der Zelleinbettung oder Fehler in der Kristallstruktur hervorgerufen werden, können eine Änderung der U/I-Kennlinienbverlaufes bewirken. Ebenso sind Verfärbungen, Erblindungen oder auch Verschmutzungen des Moduldeckmaterials denkbar, welche in einer Absenkung des Niveaus der U/I-Kennlinie münden können. Auch kann ein vereinzelter Zellbruch im Modul vorliegen, der zu mehreren lokalen Maxima der U/I-Kennlinie führen kann.

Tritt somit eine Störung der vorstehenden Art auf, so hat der Verwender der Module ein hohes Interesse daran, die tatsächliche U/I-Kennlinie feststellen zu können, da dann seine Solarzellenenergieerzeugungsanlage nicht leistungsoptimal arbeitet. Dies ist insbesondere dann von hoher wirtschaftlicher Bedeutung, wenn er den Strom mittels eines Wechselrichters gegen Erstattung eines Verrechnungspreises in das öffentliche Stromnetz einspeist. Hier will der Verwender der Solarzellen somit eine möglichst häufige Kontrolle der U/I-Kennlinie vornehmen können.

Zu diesem Zwecke werden daher auf dem Markt Kennlinienmessgereäte - etwa von der Fa. PV-Engineering aus Iserlohn - angeboten, mit deren Hilfe eine Messung der U/I-Kennlinie der Solarmodule möglich ist. Diese Geräte sind jedoch zum einen recht teuer und weisen zum anderen den Nachteil auf, daß zu ihrem Betrieb die Solarzellenanlage vom Netz getrennt werden muß.

Es ist daher Aufgabe der vorliegenden Erfindung eine Vorrichtung anzugeben, die es ermöglicht die U/I-Kennlinie von Solarzellen ohne separate Kennlinienmessgeräte zu ermitteln.

Die Aufgabe wird erfindungsgemäß durch einen Wechselrichter für ein Solarmodul oder Solarmodule gelöst, der erfindungsgemäß dadurch gekennzeichnet ist, daß der Wechselrichter eine Einrichtung zur Aufnahme der U/I-Kennlinie des Solarmoduls oder der Solarmodule aufweist. Auf diese Weise wird die Kennlinienermittlung sogleich mit in den Wechselrichter integriert und es entfällt ein aufwendiges und teures externes Messgerät. Auch ist es hierdurch nicht mehr erforderlich, die Anlage vom öffentlichen Netz zur Messung zu trennen, was die Handhabung erheblich vereinfacht und so auch häufigere Messungen ohne großen Aufwand zulässt.

Vorzugsweise ist der erfindungsgemäße Wechselrichter für das Solarmodul oder die Solarmodule so ausgestaltet, daß er die Einrichtung zur Aufnahme der U/I-Kennlinie parallel zu einer MPP-Tracking-Einrichtung aufweist. Dies ist besonders empfehlenswert, da die MPP-Tracking-Einrichtung, also die Einrichtung zur Suche des optimalen Leistungsarbeitspunktes (MPP=Maximum Point of Power) ohnehin die technischen Mittel zur Verfügung stellt, die zur Ermittlung der U/I-Kennlinie erforderlich sind, da sie ja entweder Strom- oder Spannung variieren können muß, um das Produkt aus beiden, also die Leistung P, auf ein Maximum regeln zu können.

Vorzugsweise ist dabei der erfindungsgemäße Wechselrichter für das Solarmodul oder die Solarmodule so eingerichtet, daß die Einrichtung zur Aufnahme der U/I-Kennlinie alternativ zu der MPP-Tracking-Einrichtung betrieben werden kann, wodurch diese nicht gestört wird.

Die Einrichtung zur Aufnahme der U/I-Kennlinie kann so arbeiten, daß sie die Spannung des Solarmoduls vorgibt und zu den so vorgegebenen Spannungswerten die zugehörigen Ströme mißt. Sie kann aber den Strom des Solarmoduls vorgeben und zu den so vorgegebenen Stromwerten die zugehörigen Spannungen messen. Vorzugsweise kann dabei jeweils der Vorgabewert (Spannung oder Strom) von einem Startwert an, vorzugsweise Null (Volt bzw. Ampere) aufsteigend bis zu einem Maximum oder von einem Maximum ausgehend absteigend bis zu einem Endwert, vorzugsweise Null (Volt oder Ampere) vorgegeben werden und zu den so vorgegebenen Werten die zugehörige Spannung oder der zugehörige Strom in dem gewünschten Bereich gemessen werden. Selbstverständlich kann dabei auch von der Leerlaufspannung bis zum Kurzschluß oder umgekehrt, also über den gesamten Bereich der Kennlinie gemessen werden. Unter der Messung bis zu einem Maximum soll dabei insbesondere auch eine solche Messung verstanden werden, die theoretisch unendlich fortgesetzt, in der Praxis aber dann beendet wird, wenn keine Steigerung der Spannungs-oder Stromvorgabe mehr möglich ist oder ein Timeout (also eine Zeitschranke) erreicht ist.

Auch kann der Wechselrichter für das Solarmodul oder die Solarmodule nach der vorliegenden Erfindung eine Einrichtung zur Anzeige, zur Abspeicherung oder Bewertung der aufgenommenen U/I-Kennlinie aufweisen.

Außer der UI/-Kennlinie selbst können selbstverständlich auch andere Informationen angezeigt werden, etwa insbesondere aus der Kennlinie abgeleitete Kenndaten oder Ergebnisse der Bewertung der Kennlinie.

Die Aufnahme und/oder Abspeicherung der Kennlinie ermöglicht selbstverständlich auch eine Übertragung dieser und anderer Werte über eine drahtgebundene oder drahtlose Datenschnittstelle, wie etwa eine serielle oder parallele Schnittstelle, wobei etwa insbesondere eine USB-Schnittstelle, eine serielle RS-232 Schnittstelle, ein Netzwerkanschluß, wie etwa ein EthernetNetzwerkanschluß mit TCP/IP-Protokoll oder auch eine drahtlose IrDA oder Bluetooth-Schnittstelle infrage kommen.

Vor Übertragung über eine Datenschnittstelle oder Abspeicherung der Daten im Wechselrichter kommt selbstverständlich auch eine weitere Aufbereitung, wie filtern, komprimieren oder das Ermitteln bestimmter Kenndaten (z.B. der Leerlaufspannung, des Kurzschlussstromes, des MPP, eines MPP-Bereiches mit einer, vorzugsweise prozentual angegebenen Leistungsminderungstoleranz oder auch von Wendepunkten) infrage.

Selbstverständlich ermöglicht der erfindungsgemäße Wechselrichter für Solarmodule vorzugsweise auch die Kombination von Messen, Bewerten oder das Messen von Teilbereichen zur detaillierten Untersuchung interessierender Kennlinienabschnitte.

Zur Bewertung der Kennlinien können unterschiedlichste Möglichkeiten zur Anwendung kommen,
- wie etwa die Ermittlung von Peakleistungen (vgl. etwa Kaunz, G., Schulte K.M., Wagner, A., Qualitätssicherung durch Peakleistungs-Messung unter natürlichen Umgebungsbedingungen, VDI-Berichte Nr. 1594, Fortschrittliche Energiewandlung und -anwendung, Schwerpunkt: Dezentrale Energiesysteme, Tagung Bochum 13. und 14. März 2001, welche hier durch Inbezugnahme mit aufgenommen wird.),
- die Leistungsermittlung, also die Ermittlung der Gesamtfläche unter der U/I-Kennlinie, oder
- die Ermittlung der normierten Peakleistung (vorzugsweise P-Peak-1/P-int-1 - P-Peak-2/P-int-2).

Ebenso kann eine Einrichtung zum Vergleich der aktuell aufgenommenen U/I-Kennlinie mit früher aufgenommenen oder auf andere Weise abgespeicherten U/I-Kennlinien oder von früher aufgenommenen oder auf andere Weise abgespeicherten U/I-Kennlinien untereinander vorgesehen sein, womit insbesondere auch ein Vergleich von gemessenen Kennlinien in größerem Zeitabstand möglich ist. Auch ist hiermit ein Vergleich einer Referenzkennlinie mit anderen Kennlienien, insbesondere der gerade aufgenommenen Kennlinie möglich.

In einer bevorzugten Ausführungsform nach der vorliegenden Erfindung ist der Wechselrichter für Solarmodule dadurch gekennzeichnet, daß die Einrichtung zur Bewertung der aufgenommenen U/I-Kennlinie den Peak.leistungsunterschied zwischen der aktuell aufgenommenen U/I-Kennlinie und einer früher aufgenommenen U/I-Kennlinie ermittelt. Dabei kann die Einrichtung zur Bewertung der aufgenommenen U/I-Kennlinie auch den normierten Peak.leistungsunterschied zwischen der aktuell aufgenommenen U/I-Kennlinie und einer früher aufgenommenen U/I-Kennlinie ermitteln.

In einer weiteren bevorzugten Ausführungsform ist der Wechselrichter für Solarmodule nach der vorliegenden Erfindung dadurch gekennzeichnet, daß die Einrichtung zur Bewertung der aufgenommenen U/I-Kennlinie den Unterschied zwischen der Gesamtfläche unter der aktuell aufgenommenen U/I-Kennlinie und einer früher aufgenommenen U/I-Kennlinie ermittelt.

Vorzugsweise kann der erfindungsgemäße Wechselrichter für Solarmodule auch eine Einrichtung zur Abspeicherung der ermittelten Bewertung oder Bewertungen aufweisen.

Hierdurch ist es auch möglich eine Detektion der Änderung des Serienwiderstandes des Solarzellengenerators (auch Solarmodul, Solarzellenmodul, Solarpaneel oder Solarzellenpaneel) durchzuführen. Dies kann durch aufeinander folgende Messungen mit unterschiedlicher Einstrahlung wie folgt geschehen:

Wie in der DIN EN 60891, welche hiermit durch Inbezugnahme mit aufgenommen wird, sind dazu 2 Messungen mit unterschiedlicher Bestrahlungsstärke bei gleicher Zelltemperatur und gleicher spektraler Verteilung durchzuführen. Durch aufeinander folgende Messungen vor (oder nach) und während einer Beschattung durch Wolken erhält man 2 Messungen (ein Paar) mit unterschiedlicher Bestrahlungsstärke, allerdings bei veränderter spektraler Verteilung. Hiermit kann man einen Serienwiderstand berechnen, der nicht dem wirklichen Serienwiderstand entspricht (virtueller Serienwiderstand). Durch Vergleich von virtuellen Serienwiderständen, die unter ähnlichen Einstrahlungsbedingungen ermittelt werden, lassen sich dann die Veränderungen am realen Serienwiderstand erkennen. (Dies auch im Unterschied zu dem zum Patent angemeldeten Verfahrenvon Hr. Prof. Andreas Wagner mit dem Titel "Verfahren zur Serien-Innenwiderstandsmessung von photovoltaischen Zellen und Modulen (PV-Modulen), das hiermit durch Inbezugnahme mit aufgenommen wird und welches mit nur einer einzigen Messung auskommt.) Veränderungen im Serienwiderstand deuten dabei auf Kontaktierungsprobleme (etwa durch Korrosion) hin. Im übrigen sei zu der Problematik der Rs-Messung auf Wagner, A., Qualitätskontrolle durch Rs-Messung unter realen Umgebungsbedingungen, Proc. 12, Internationales Sonnenforum, 5.-7. Juli 2000, Freiburg hingewiesen, wobei dieser Text hier ebenfalls durch Inbezugnahme mit aufgenommen wird.

Allgemein zur Qualitätskontrolle photovoltaischer Zellen und Module sei auf die Texte von Wagner:
Photovoltaik Engineering, Die Methode der effektiven Solarzellenkennlinie, Springer Verlag, Berlin, Heidelberg, New York, 1989, und
Verfahren zur Qualitätskontrolle von photovoltaischen Zellen und Modulen (PV-Modulen), DE 100 26 162 C2 hingewiesen,
welche ebenfalls beide hiermit durch Inbezugnahme mit aufgenommen werden. Gleiches gilt für den Text von Schulte, K.M. und Wagner A., Die effektive Solarzellenkennlinie - Anwendung in der Teillast-Berechnung, Proc. 17, Symposium Photovoltaische Solarenergie, 13. - 15. März 2002, Staffelstein 2002.

Auch kann es weiterhin vorteilhaft sein, daß der erfindungsgemäße Wechselrichter weitere externe Größen, wie etwa Modultemperatur (Paneeltemperatur) oder Einstrahlungsstärke erfasst und so die Messergebnisse oder deren Bewertung weiter verbessert.

Vorzugsweise können alle Messungen auch automatisch, etwa monatlich oder bei bestimmten Wetterbedingungen - soweit messtechnisch erfassbar - gestartet werden, da bei der erfindungsgemäßen Vorrichtung ja keine manuellen Verrichtungen zur Messung mehr erforderlich sind.

Im folgenden werden nicht einschränkend zu verstehende Ausführungsbeispiele der vorliegenden Erfindung anhand von Text und Zeichnung besprochen. In dieser zeigen:
- Fig. 1: unterschiedliche Verläufe von U/I-Kennlinien bei sich ändernden Umgebungsbedingungen,
- Fig. 2: eine U/I-Kennlinie eines fehlerhaften Solarmoduls,
- Fig. 3: den typischen Aufbau eines Wechselrichters für Solarzellenpanelle mit MPP-Tracking und Hochsetzsteller nach dem Stand der Technik,
- Fig. 4: einen erfindungsgemäßen Wechselrichter für Solarmodule mit MPP-Tracking und einer Einrichtung zur Aufnahme der U/I-Kennlinie des Solarmoduls, die einen Hochsetzstellers aufweist, der die Spannung des Solarmoduls vorgibt und zu den so vorgegebenen Spannungswerten die zugehörigen Ströme mißt und zudem eine Einrichtung zur Anzeige und Speicherung der aufgenommenen U/I-Kennlinie vorgesehen ist, und
- Fig. 5: einen erfindungsgemäßen Wechselrichter für Solarzellenpanelle mit MPP-Tracking und einer Einrichtung zur Aufnahme der U/I-Kennlinie des Solarmoduls, die ei- nen Hochsetzstellers aufweist, der den Strom des Solarmoduls vorgibt und zu den so vorgegebenen Stromwerten die zugehörigen Spannungen mißt und zudem eine Einrichtung zur Anzeige und Speicherung der aufgenommenen U/I-Kennlinie vorgesehen ist.

Fig. **1** zeigt unterschiedliche Verläufe von U/I-Kennlinien U/I₁, U/I₂, U/I₃ bei sich ändernden Umgebungsbedingungen. Aufgetragen im Koordinatensystem sind hier auf der X-Achse die Spannung **U** und der Y-Achse der Strom **I**.

Entsprechend verhält sich die Leistung **P**, welche durch die Fläche gegeben ist, die durch das Rechteck aufgespannt wird, dessen einer Eckpunkt im Ursprung und dessen gegenüberlieggender Eckpunkt in dem hier betrachteten Punkt **B** auf der U/I-Kennlinie U/I₃ liegt.

Man sieht, wie die U/I-Kennlinien U/I₁, U/I₂, U/I₃ zwar gleichartig verlaufen, jedoch auf unterschiedlichem Niveau, so daß die Leistung, also die jeweilige einem Betrachtungspunkt auf der Kennlinie zugehörige Fläche **P** mit sinkendem Niveau der Kennlinie ebenfalls abnimmt.

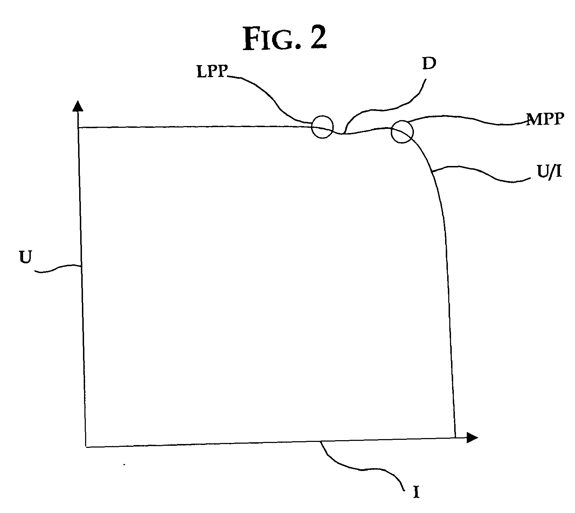

Fig. **2** zeigt eine U/I-Kennlinie U/I eines fehlerhaften Solarmoduls 2. Die Kennlinie **U/I** zeigt hier an der Stelle D eine Delle, was dazu führt, daß ein MPP-Tracking nicht mehr unbedingt den optimalen Leistungspunkt **MPP**, sondern nur noch einen Punkt niedrigerer Leistung **LPP** (Lower Power Point) findet.

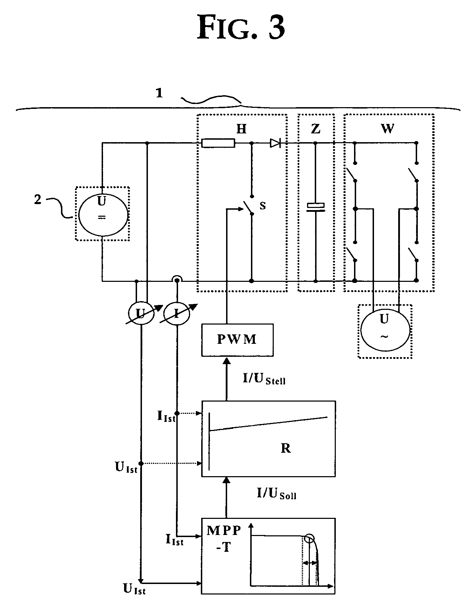

Fig. **3** zeigt den typischen Aufbau eines Wechselrichters 1 für Solarmodule 2 mit MPP-Tracking **MPP-T** und Hochsetzsteller **H** nach dem Stand der Technik. Hier werden Gleichspannung **U**= und Strom **I** am Ausgang des Solarmoduls 2 gemessen und einem Regler **R** zugeführt der über einen Pulsweitenmodulator **PWM** und einen Halbleiterschalter (etwa eine Transistor oder Thyristor) S einen Hochsetzsteller **H** auf einen von einem MPP-Tracker **MPP-T** vorgegebenen - möglichst hinsichtlich der Leistung optimalen - Spannungs-oder Stromsollwert regelt. Der Hochsetzsteller **H** führt sodann auf einen Zwischenkreis **Z** einheitlicher Spannung, der schließlich auf den eigentlichen Wechselrichter W, hier eine Vollbrücke - ohne Ansteuerung der Halbleiterschalter zu sehen - führt, welcher sodann Wechselspannung U~ ins Netz einspeist.

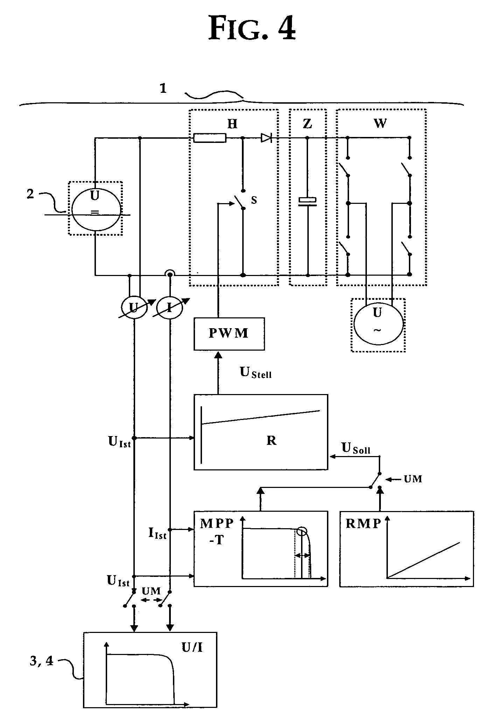

Fig. 4 zeigt einen erfindungsgemäßen Wechselrichter **1** für Solarmodule **2** mit MPP-Tracking **MPP-T** und einer Einrichtung zur Aufnahme der U/I-Kennlinie **U/I** des Solarmoduls **2**, die einen Hochsetzstellers **H** aufweist, der die Spannung U= des Solarmoduls 2 vorgibt und zu den so vorgegebenen Spannungswerten die zugehörigen Ströme mißt und zudem eine Einrichtung zur Anzeige **3** und Speicherung **4** der aufgenommenen U/I-Kennlinie **U/I** vorgesehen ist. Der erfindungsgemäße Wechselrichter **1** weist hier in dieser Ausführungsform nämlich einen Schalter **UM** auf, der in der einen Position den Wechselrichter wie nach dem Stand der Technik als MPP-Tracker **MPP-T** betreibt, aber in der anderen Position des Schalters **UM** statt des MPP-Trackers **MPP-T** eine Einrichtung zur Aufnahme der der U/I-Kennlinie **U/I** aktiviert, indem sodann der Spannungssollwert U_{Soll} für den Regler **R** nicht mehr vom MPP-Tracker **MPP-T**, sondern von einem Rampengenerator **RMP** kommt, der in der Lage ist, einen bestimmten Spannungsbereich - hier aufsteigend dargestellt, grundsätzlich aber auch absteigend möglich - zu durchfahren, so daß der Regler R so die U/I-Kennlinie U/I in diesem Bereich durchfährt. Auch aktiviert der Schalter **UM** eine Abspeicher- und Anzeigeeinrichtung **3**, **4**, die die UI/-Kennlinie **U/I** anzeigt und im Speicher hinterlegt. Sebstverständlich ist der Schalter **UM** - wie auch alle anderen Einrichtungen, soweit möglich - vorzugsweise softwaremäßig, etwa durch eine Menüauswahl in der Bedienung des Wechselrichters, realisiert.

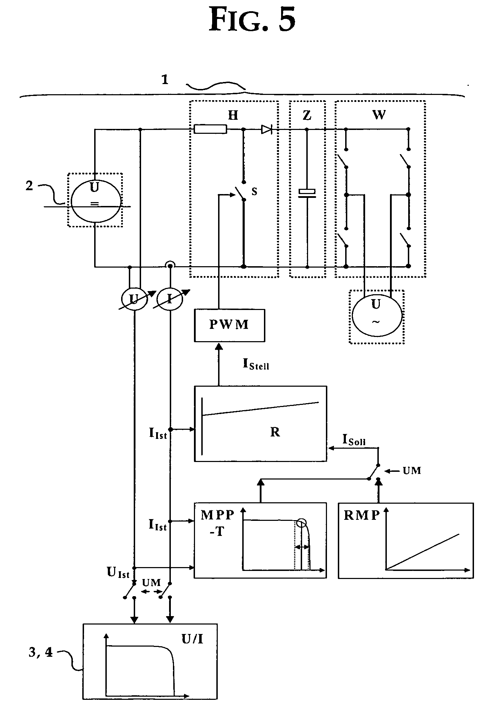

Fig. **5** zeigt ähnlich wie zuvor Fig. 4 einen erfindungsgemäßen Wechselrichter **1** für Solarmodule **2** mit MPP-Tracking **MPP-T** und einer Einrichtung zur Aufnahme der U/I-Kennlinie **U/I** des Solarmoduls **2**, die einen Hochsetzstellers **H** aufweist, der hier den Strom **I** des Solarmoduls **2** vorgibt und zu den so vorgegebenen Strömen die zugehörigen Spannungen mißt und genau wie der erfindungsgemäße Wechselrichter nach Fig. **4** auch eine Einrichtung zur Anzeige **3** und Speicherung **4** der aufgenommenen U/I-Kennlinie **U/I** aufweist.

## Patentansprüche

1. Wechselrichter (1) für ein Solarmodul (2) oder Solarmodule (2), **dadurch gekennzeichnet, daß** der Wechselrichter (1) eine Einrichtung zur Aufnahme der U/I-Kennlinie (U/I) des Solarmoduls (2) oder der Solarmodule (2) aufweist.

2. Wechselrichter (1) für ein Solarmodul (2) oder Solarmodule (2) nach Anspruch 1, **dadurch gekennzeichnet, daß** der Wechselrichter (2) die Einrichtung zur Aufnahme der U/I-Kennlinie (U/I) parallel zu einer MPP-Tracking-Einrichtung (**MPP**) aufweist.

3. Wechselrichter (1) für ein Solarmodul (2) oder Solarmodule (2) nach Anspruch 2, **dadurch gekennzeichnet, daß** die Einrichtung zur Aufnahme der U/I-Kennlinie (U/I) alternativ zu der MPP-Tracking-Einrichtung (**MPP**) betrieben werden kann.

4. Wechselrichter (1) für ein Solarmodul (2) oder Solarmodule (2) nach Anspruch 1, 2 oder 3, **dadurch gekennzeichnet, daß** die Einrichtung zur Aufnahme der U/I-Kennlinie (U/I) so arbeitet, daß sie die Spannung des Solarmoduls vorgibt und zu den so vorgegebenen Spannungswerten die zugehörigen Ströme mißt.

5. Wechselrichter (1) für ein Solarmodul (2) oder Solarmodule (2) nach Anspruch 4, **dadurch gekennzeichnet, daß** die Einrichtung zur Aufnahme der U/I-Kennlinie (U/I) so arbeitet, daß sie die Spannung des Solarmoduls von einem Startwert, vorzugsweise Null Volt aufsteigend bis zu einem Maximum vorgibt und zu den so vorgegebenen Spannungswerten die zugehörigen Ströme mißt.

6. Wechselrichter (1) für ein Solarmodul (2) oder Solarmodule (2) nach Anspruch 4, **dadurch gekennzeichnet, daß** die Einrichtung zur Aufnahme der U/I-Kennlinie (U/I) so arbeitet, daß sie die Spannung des Solarmoduls von einem Maximum absteigend bis zu einem Endwert, vorzugsweise Null Volt vorgibt und zu den so vorgegebenen Spannungswerten die zugehörigen Ströme mißt.

7. Wechselrichter (1) für ein Solarmodul (2) oder Solarmodule (2) nach Anspruch 1, 2 oder 3, **dadurch gekennzeichnet, daß** die Einrichtung zur Aufnahme der U/I-Kennlinie (U/I) so arbeitet, daß sie den Strom des Solarmoduls vorgibt und zu den so vorgegebenen Stromwerten die zugehörigen Spannungen mißt.

8. Wechselrichter (1) für ein Solarmodul (2) oder Solarmodule (2) nach Anspruch 7, **dadurch gekennzeichnet, daß** die Einrichtung zur Aufnahme der U/I-Kennlinie (U/I) so arbeitet, daß sie den Strom des Solarmoduls von einem Startwert, vorzugsweise Null Ampere aufsteigend bis zu einem Maximum vorgibt und zu den so vorgegebenen Stromwerten die zugehörigen Spannungen mißt.

9. Wechselrichter (1) für ein Solarmodul (2) oder Solarmodule (2) nach Anspruch 7, **dadurch gekennzeichnet, daß** die Einrichtung zur Aufnahme der U/I-Kennlinie (U/I) so arbeitet, daß sie den Strom des Solarmoduls von einem Maximum absteigend bis zu einem Endwert, vorzugsweise Null Ampere vorgibt und zu den so vorgegebenen Stromwerten die zugehörigen Spannungen mißt.

10. Wechselrichter (1) für ein Solarmodul (2) oder Solarmodule (2) nach einem der Ansprüche 1 bis 9, **dadurch gekennzeichnet, daß** die Einrichtung zur Aufnahme der U/I-Kennlinie (U/I) einen Hochsetzstellers (H) aufweist, der den Strom oder die Spannung des Solarmoduls vorgibt.

11. Wechselrichter (1) für ein Solarmodul (2) oder Solarmodule (2) nach einem der Ansprüche 1 bis 10, **dadurch gekennzeichnet, daß** der Wechselrichter (1) eine Einrichtung zur Anzeige (3) der aufgenommenen U/I-Kennlinie (U/I) aufweist.

12. Wechselrichter (1) für ein Solarmodul (2) oder Solarmodule (2) nach einem der Ansprüche 1 bis 11, **dadurch gekennzeichnet, daß** der Wechselrichter (1) eine Einrichtung zur Abspeicherung (4) der aufgenommenen U/I-Kennlinie (U/I) aufweist.

13. Wechselrichter (1) für ein Solarmodul (2) oder Solarmodule (2) nach Anspruch 12, **dadurch gekennzeichnet, daß** der Wechselrichter (1) eine Einrichtung zum Vergleich der aktuell aufgenommenen U/I-Kennlinie (U/I) mit früher aufgenommenen oder auf andere Weise abgespeicherten U/I-Kennlinien oder von früher aufgenommenen oder auf andere Weise abgespeicherten U/I-Kennlinien untereinander aufweist.

14. Wechselrichter (1) für ein Solarmodul (2) oder Solarmodule (2) nach einem der Ansprüche 1 bis 13, **dadurch gekennzeichnet, daß** der Wechselrichter (1) eine Einrichtung zur Bewertung der aufgenommenen U/I-Kennlinie (U/I) aufweist.

15. Wechselrichter (1) für ein Solarmodul (2) oder Solarmodule (2) nach Anspruch 13 und 14, **dadurch gekennzeichnet, daß** die Einrichtung zur Bewertung der aufgenommenen U/I-Kennlinie (U/I) den Peak.leistungsunterschied zwischen der aktuell aufgenommenen U/I-Kennlinie (U/I) und einer früher aufgenommenen U/I-Kennlinie ermittelt.

16. Wechselrichter (1) für ein Solarmodul (2) oder Solarmodule (2) nach Anspruch 15, **dadurch gekennzeichnet, daß** die Einrichtung zur Bewertung der aufgenommenen U/I-Kennlinie (U/I) den normierten Peak.leistungsunterschied zwischen der aktuell aufgenommenen U/I-Kennlinie (U/I) und einer früher aufgenommenen U/I-Kennlinie ermittelt.

17. Wechselrichter (1) für ein Solarmodul (2) oder Solarmodule (2) nach Anspruch 13 und 14 oder 15 oder 16, **dadurch gekennzeichnet, daß** die Einrichtung zur Bewertung der aufgenommenen U/I-Kennlinie (U/I) den Unterschied zwischen der Gesamtfläche unter der aktuell aufgenommenen U/I-Kennlinie (U/I) und einer früher aufgenommenen U/I-Kennlinie ermittelt.

18. Wechselrichter (1) für ein Solarmodul (2) oder Solarmodule (2) nach einem der Ansprüche 14 bis 17, **dadurch gekennzeichnet, daß** der Wechselrichter (1) auch eine Einrichtung zur Abspeicherung der ermittelten Bewertung oder Bewertungen aufweist.

19. Wechselrichter (1) für ein Solarmodul (2) oder Solarmodule (2) nach einem der Ansprüche 1 bis 18, **dadurch gekennzeichnet, daß** der Wechselrichter (1) auch eine Datenschnittstelle zur Übertragung von Daten, vorzugsweise der U/I-Kennlinie U/I aufweist.

20. Wechselrichter (1) für ein Solarmodul (2) oder Solarmodule (2) nach einem der Ansprüche 1 bis 19, **dadurch gekennzeichnet, daß** der Wechselrichter (1) auch einen Sensor zur Messung der Solarmodultemperatur aufweist.

21. Wechselrichter (1) für ein Solarmodul (2) oder Solarmodule (2) nach einem der Ansprüche 1 bis 20, **dadurch gekennzeichnet, daß** der Wechselrichter (1) auch einen Sensor zur Messung der Einstrahlungsstärke der auf das Solarmodul (2) oder die Solarmodule (2) auftreffenden Strahlung aufweist.
